# FASCICULE DE BREVET EUROPEEN

(11) **EP 2 289 899 B1**
(45) Date de publication et mention de la délivrance du brevet: **22.03.2017**
(21) Numéro de dépôt: 10290392.9
(22) Date de dépôt: 13.07.2010
(51) Int. Cl.: C07F 9/165, C12P 7/10

(54) **Nouveaux liquides ioniques à base d'anions dithiophosphate et leurs préparations**
Auf Dithiophosphatanionen basierende neuartige ionische Flüssigkeiten und ihre Herstellung
New ionic liquids based on dithiophosphate anions and preparations thereof

(30) Priorité: 31.07.2009 FR 0903811
(43) Date de publication de la demande: 02.03.2011
(73) Titulaire: IFP Énergies nouvelles, 92852 Rueil-Malmaison Cedex (FR)
(72) Inventeur: Delfort, Bruno, 75005 Paris (FR); Morvan, Didier, 69440 Mornant (FR); Vallee, Christophe, 38360 Sassenage (FR); Olivier-Bourbigou, Hélène, 69230 Saint Genis-Laval (FR); Pellier, Emmanuel, 69420 Tupin Semons (FR)

(56) Documents cités:
- WO-A1-2008/090155
- WO-A1-2010/096167
- WO-A2-2007/138256
- WO-A2-2010/116165
- DD-A1- 105 242
- US-B2- 6 824 599
- MEL'NIKOV N.N., KHASKIN B. A., TUTURINA N. N., PERSHIN G. N., MILOVANOVA S. N.: "O,O-dialkyldithiophosphates of quaternary phosphonium and their bacteriostatic and bactericidal activity" PHARMACEUTICAL CHEMISTRY JOURNAL, vol. 2, no. 5, 1968, pages 239-242, XP002563860
- MC CLEVERTY J A ET AL: "Aspects of the Inorganic Chemistry of Rubber Vulcanisation. Dialkyl- and Diaryl-dithiophoshate and -dithiophosphinate Complexes of Zinc: Phosphorus-31 Nuclear Magnetic Resonance Spectral Studies and Structures of [NMe4][Zn{S2P(OC6H4Me-p)2}3] and Net4][Zn(s2PPh2)3]" JOURNAL OF THE CHEMICAL SOCIETY, DALTON TRANSACTIONS, CHEMICAL SOCIETY. LETCHWORTH, GB, 1 janvier 1983 (1983-01-01), pages 627-634, XP009128038 ISSN: 1472-7773
- CHAUHAN H. P. S., SRIVASTAVA G., MEHROTRA R. C.: "Synthesis and characterization of tetraphenylphosphonium and -arsonium dialkyl dithiophosphates" SYNTHESIS AND REACTIVITY IN INORGANIC AND METAL-ORGANIC CHEMISTRY, vol. 12, no. 5, 1982, pages 593-600, XP009128072
- HILGETAG G., LEHMANN G., MARTINI A., SCRAMM G., TEICHMANN H.: "Über alkylierende Esterspaltungen einiger Dialkyl-aryl-und Alkyl-diaryl-thiophosphate" JOURNAL FÜR PRAKTISCHE CHEMIE, vol. 8, no. 3-4, 1959, pages 207-223, XP002563862

## Description

### Domaine de l'invention

L'invention porte sur une utilisation d'une famille de liquides ioniques comprenant un anion de type dithiophosphate.

### Étude de l'art antérieur

Les liquides ioniques, de formule générale Q⁺A⁻, sont des sels liquides à des températures inférieures ou égales à 100°C qui présentent des propriétés physico-chimiques particulières. Ils se caractérisent notamment par de faibles ou inexistantes tensions de vapeur et par de grandes plages de stabilité thermique où ils restent liquides. Ces propriétés en font des solvants alternatifs plus respectueux de l'environnement que les solvants organiques volatiles conventionnels, ils permettent notamment d'éviter toute perte de matière pendant l'évaporation et ainsi de réduire l'émission de composés organiques volatils.

Les liquides ioniques sont composés d'ions et ne contiennent pas de molécules neutres, ce qui permet d'obtenir des milieux hautement polaires. Ces propriétés ont fait des liquides ioniques des composés de plus en plus utilisés comme solvants et catalyseurs pour les réactions organiques, catalytiques ou enzymatiques, comme solvants pour les séparations liquide-liquide, les extractions ou encore pour la synthèse de nouveaux matériaux (voir par exemple H. Olivier-Bourbigou, L. Magna, J. Mol. Catal. A, Chem. 2002, 182, 419 "lonic liquids: perspectives for organic and catalytic reactions"; P. Wasserscheidt Angew. Chem. Int. Ed. Engl. 2000, 39, 3772 "lonic liquid- Novel solutions for transition-metal catalysis" ; P. Wasserscheidt Ionic Liquids in Synthesis, 2002, Wiley-VCH; R. Sheldon Chem. Comm. 2001, 2399 "Catalytic reactions in ionic liquids" ; M. J. Earle, K. R. Seddon Pure Appl. Chem. 2000, 72, 1391 "lonic liquids, green solvent for the future"; T. Welton Chem. Rev. 1999, 92, 2071 "Room temperature ionic liquids. Solvents for synthesis and catalysis" R. Hagiwara, Y. Ito J. Fluorine Chem. 2000, 105, 221-227 "Room temperature ionic liquids of alkylimidazolium cations and fluoroanions").

Les liquides ioniques peuvent également être utilisés comme solvant de biopolymères, comme la cellulose ou la biomasse lignocellulosique, comme décrit dans le brevet US-6,824,599. La demande de brevet WO 2007/138256 décrit l'hydrolyse de la cellulose dans un liquide ionique. On peut citer également la demande de brevet WO 2008/090155 qui décrit le prétraitement d'un matériau cellulosique au moyen d'un liquide ionique, suivi d'une hydrolyse enzymatique du matériau cellulosique prétraité.

L'engouement pour cette nouvelle classe de solvants résulte de leurs propriétés physico-chimiques qu'il est possible de moduler en changeant la nature de l'anion et du cation. Ainsi, la polarité, l'hydrophobicité ou la lipophilicité, la viscosité peuvent être contrôlées par les choix judicieux des constituants du liquide ionique.

De part toutes ces raisons évoquées il est donc nécessaire de développer des nouvelles familles de liquides ioniques afin d'adapter les propriétés de ces liquides ioniques à chaque application. C'est dans ce cadre que s'inscrit la présente invention.

### Résumé de l'invention

La présente invention porte sur une utilisation de liquides ioniques à base d'anions dithiophosphate et de cations organiques. Leurs procédés de préparation, ainsi que leur utilisation pour la solubilisation et/ou le traitement des polymères sont également décrits.

### Description détaillée de l'invention.

Il est décrit ci-après l'utilisation d'un liquide ionique associant un cation organique Q+ à un anion dithiophosphate, répondant à la formule suivante : 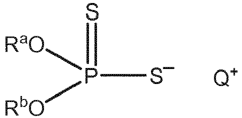 dans laquelle
- R^{a} et R^{b}, identiques ou différents, représentent des radicaux hydrocarbyles ayant de 1 à 30 atomes de carbone, de préférence des groupements alkyles, saturés ou non saturés, cycloalkyles ou aromatiques, aryles ou aralkyles, éventuellement substitués, comprenant de 1 à 30 atomes de carbone,
- tout ou partie des hydrogènes des radicaux R^{a} et R^{b} pouvant être remplacés par des hétéroatomes, tels que des halogènes,
- les radicaux R^{a} et R^{b} portant éventuellement une ou plusieurs fonctions choisies parmi les fonctions -CO₂R -C(O)R, -OR, -C(O)NRR', -C(O)N(R)NR'R", -NRR', -SR, - S(O)R, -S(O)₂R, -SO₃R, -CN, -N(R)P(O)R'R', -PRR', -P(O)RR', -P(OR)(OR'), - P(O)(OR)(OR') dans lesquelles R, R' et R", identiques ou différents, représentent chacun l'hydrogène ou des radicaux hydrocarbyles ayant de 1 à 30 atomes de carbone,

Les cations Q⁺, ammonium quaternaires sont dérivés d'hétérocycles azotés comportant 1, 2 ou 3 atomes d'azote de formules générales : 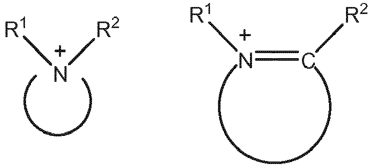 dans lesquelles les cycles sont constitués de 4 à 10 atomes de carbone, de préférence de 5 à 6 atomes de carbone.

Parmi les groupements R¹, R², R³, R⁴, R⁵ et R⁶, on mentionnera les radicaux méthyle, éthyle, propyle, isopropyle, butyle primaire, butyle secondaire, butyle tertiaire, amyle, phényle ou benzyle.

Selon la présente invention, le cation Q⁺ est choisi dans le groupe formé par le *N-*butylpyridinium, le *N*-éthylpyridinium, l'éthyl-3-méthyl-1-imidazolium, le butyl-3-méthyl-1-imidazolium, l'allyl-3-méthyl-1-imidazolium, le vinyl-3-méthyl-1-imidazolium, le vinyl-3-allyl-1-imidazolium, l'hexyl-3-méthyl-1-imidazolium, le butyl-3-diméthyl-1,2-imidazolium, le cation (hydroxy-2-éthyl)-1-méthyl-3-imidazolium, le cation (carboxy-2-éthyl)-1-méthyl-3-imidazolium, le diéthylpyrazolium, le *N*-butyl-*N*-méthylpyrrolidinium, le *N*-butyl-*N*-méthylmorpholinium.

Les radicaux R^{a} et R^{b} peuvent également être liés et représentent alors un unique groupement alkylidène ou phénylidène.

Les anions sont choisis parmi les structures suivantes:

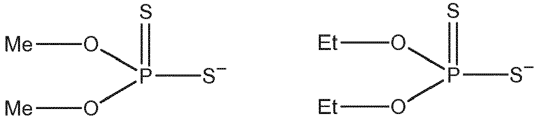

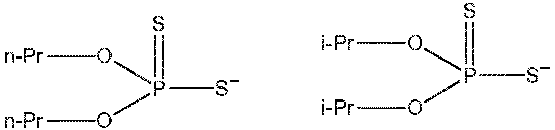

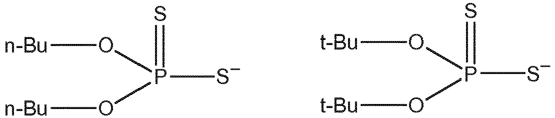

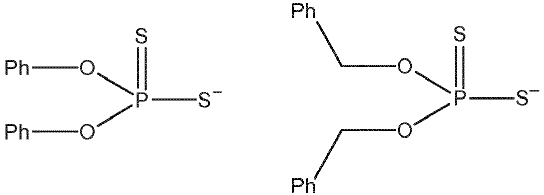

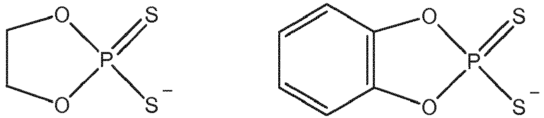

Selon la présente invention, les liquides ioniques sont le diéthyldithiophosphate d'allyl-3-méthyl-1-imidazolium, le diéthyldithiophosphate de vinyl-3-méthyl-1-imidazolium, le diéthyldithiophosphate d'éthyl-3-méthyl-1-imidazolium, le diéthyldithiophosphate de butyl-3-méthyl-1-imidazolium, le diphényldithiophosphate d'allyl-3-méthyl-1-imidazolium, le diphényldithiophosphate de vinyl-3-méthyl-1-imidazolium, le diphényldithiophosphate d'éthyl-3-méthyl-1-imidazolium, le diphényldithiophosphate de butyl-3-méthyl-1-imidazolium, le dibenzyldithiophosphate d'allyl-3-méthyl-1-imidazolium, le dibenzyldithiophosphate de vinyl-3-méthyl-1-imidazolium, le dibenzyldithiophosphate d'éthyl-3-méthyl-1-imidazolium, le dibenzyldithiophosphate de butyl-3-méthyl-1-imidazolium.

Ces liquides ioniques peuvent être utilisés seuls ou en mélange.

Les liquides ioniques précédemment décrits peuvent être préparés par des procédés de
préparation de liquides ioniques associant un cation organique Q⁺ tel que défini précédemment à un anion dithiophosphate, répondant à la formule suivante : 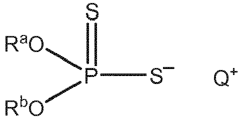 dans lesquelles
- R^{a} et R^{b}, identiques ou différents, représentent des radicaux hydrocarbyles ayant de 1 à 30 atomes de carbone, de préférence des groupements alkyles, saturés ou non saturés, cycloalkyles ou aromatiques, aryles ou aralkyles, éventuellement substitués, comprenant de 1 à 30 atomes de carbone,
- tout ou partie des hydrogènes des radicaux R^{a} et R^{b} pouvant être remplacés par des hétéroatomes, tels que des halogènes,
- les radicaux R^{a} et R^{b} portant éventuellement une ou plusieurs fonctions choisies parmi les fonctions -CO₂R, -C(O)R, -OR, -C(O)NRR', -C(O)N(R)NR'R", -NRR', -SR, - S(O)R, -S(O)₂R, -SO₃R, -CN, -N(R)P(O)R'R', -PRR', -P(O)RR', -P(OR)(OR'), - P(O)(OR)(OR') dans lesquelles R, R' et R", identiques ou différents, représentent chacun l'hydrogène ou des radicaux hydrocarbyles ayant de 1 à 30 atomes de carbone.

Le cation organique Q⁺ est choisi parmi :
les cations ammonium quaternaires dérivés d'hétérocycles azotés comportant 1, 2 ou 3 atomes d'azote de formules générales : 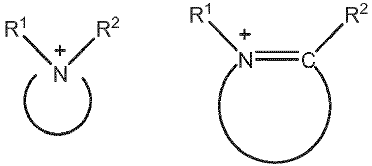 dans lesquelles les cycles sont constitués de 4 à 10 atomes, de préférence de 5 à 6 atomes,
les cations guanidinium de formule

   C(NR¹R²)(NR³R⁴)(NR⁵R⁶)⁺
et/ou les cations sulfonium, de formule

   SR¹R²R³⁺
dans lesquelles R¹, R², R³, R⁴, R⁵ et R⁶, identiques ou différents, représentent des radicaux hydrocarbyles ayant de 1 à 30 atomes de carbone, par exemple des groupements alkyles, saturés ou non-saturés, cycloalkyles ou aromatiques, aryles ou aralkyles, éventuellement substitués, comprenant de 1 à 30 atomes de carbone, portant éventuellement une ou plusieurs fonctions choisies parmi les fonctions - CO₂R, -C(O)R, -OR, -C(O)NRR', -C(O)N(R)NR'R", -NRR', -SR, -S(O)R, -S(O)₂R, - SO₃R, -CN, -N(R)P(O)R'R', -PRR', -P(O)RR', -P(OR)(OR'), -P(O)(OR)(OR') dans lesquelles R, R' et R", identiques ou différents, représentent chacun l'hydrogène ou des radicaux hydrocarbyles ayant de 1 à 30 atomes de carbone.

Selon un premier mode de préparation, le liquide ionique selon la présente invention est préparé par une réaction de métathèse d'ions entre :
- un sel de formule générale Q⁺A⁻, avec Q⁺ un cation tel que défini précédemment et A⁻ un anion, organique ou inorganique, et
- un sel de dithiophosphate de formule générale: 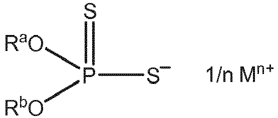 dans laquelle R^{a} et R^{b} sont définis comme précédemment et Mⁿ⁺ est un cation alcalin ou alcalino-terreux et n= 1 ou 2.

De façon préférée, l'anion A⁻ est choisi parmi les anions chlorure, bromure, iodure, nitrate, formate ou acétate. De façon très préférée l'anion est choisi parmi les anions chlorure ou bromure.

De façon préférée, le cation Mⁿ⁺ est choisi parmi les cations lithium, sodium, potassium, magnésium ou calcium. De façon très préférée, le cation Mⁿ⁺ est le cation sodium.

En général, le sel de dithiophosphate et le sel de formule générale Q⁺A⁻ sont présents en quantité stoechiométrique dans la réaction. Cependant dans de nombreux cas, il est préférable d'utiliser un excès molaire du sel de dithiophosphate par rapport à la quantité de cation introduite, par exemple dans la plage de 1.00 à 2 équivalents. Le manipulateur expérimenté pourra apprécier la nécessité ou non de faire varier les conditions de réaction et de quantité de matière introduite pour améliorer le rendement en liquide ionique.

Selon un autre mode de préparation, le liquide ionique est synthétisé par la réaction entre :
- un sel de formule générale Q⁺A⁻, avec Q⁺ un cation tel que défini précédemment et A⁻ un anion, organique ou inorganique, et
- un acide de formule générale: 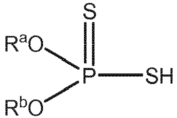 dans laquelle R^{a} et R^{b} sont définis comme précédemment.

Selon ce mode de préparation, l'acide de formule générale: 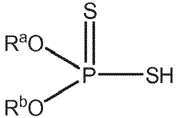 pourra être préparé *in situ* à partir de pentasulfure de phosphore et des alcools R^{a}OH et R^{b}OH, avec R^{a} et R^{b} définis comme précédemment.

De façon préférée, l'anion A⁻ sera choisi parmi les anions alkylcarbonate, de façon préférée méthylcarbonate, acétate, formate, hydroxyde.

En général, l'acide de formule générale: 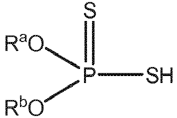 et le sel de formule générale Q⁺A⁻ sont présents en quantité stoechiométrique dans la réaction. Cependant dans de nombreux cas, il est préférable d'utiliser un excès molaire d'acide par rapport à la quantité de cation introduite, par exemple dans la plage de 1.00 à 2 équivalents. Le manipulateur expérimenté pourra apprécier la nécessité ou non de faire varier les conditions de réaction et de quantité de matière introduite pour améliorer le rendement en liquide ionique.

La synthèse des liquides ioniques décrits dans cette invention peut être réalisée dans une plage de température comprise entre -78 °C et 150 °C, de façon préférée entre -20 °C et 80 °C.

Elle peut être effectuée à l'air ou sous une atmosphère de gaz inerte (azote, argon). De façon, préférée, la synthèse est réalisée sous une atmosphère de gaz inerte.

La synthèse des liquides ioniques décrits dans cette invention peut être réalisée en l'absence de solvant ou dans un solvant organique. Les solvants organiques pour la synthèse des liquides ioniques décrits dans cette invention peuvent être choisis parmi les hydrocarbures (pentane, hexane, heptane, cyclohexane), les solvants aromatiques (benzène, toluène, xylène), les solvants chlorés (chloroforme, dichlorométhane), les solvants oxygénés (diéthyléther, THF, méthyl-THF, dioxane, diméthoxyéthane), les solvants azotés (acétonitrile, DMF, NMP, pyridine).

Les liquides ioniques synthétisés selon l'invention peuvent être séparés du milieu réactionnel et/ou purifiés selon les méthodes classiques de la chimie organique. De préférence, les liquides ioniques synthétisés selon l'invention seront séparés du milieu réactionnel par évaporation, par filtration, ou par une combinaison de ces méthodes.

Les liquides ioniques précédemment décrits peuvent être utilisés comme solvants ou catalyseurs.

Les liquides ioniques peuvent être utilisés dans des applications variées, par exemple comme solvant de réaction en chimie organique ou pour les réactions enzymatiques, comme matrice pour des techniques analytiques telles que la spectrométrie de masse MALDI (matrix assisted laser désorption ionisation), comme solvant pour des procédés d'extraction, comme vecteur en chromatographie, comme lubrifiant ou comme fluide hydraulique. Les liquides ioniques peuvent également être utilisés dans le domaine de la catalyse, des piles à combustible, de l'électrochimie, de la solubilisation et de la transformation des biomatériaux.

, Les liquides ioniques selon la présente invention sont utilisés pour la solubilisation et/ou le traitement des polymères, de façon préférée des biopolymères tel que la biomasse lignocellulosique, la cellulose et d'une façon plus générale les matériaux riches en cellulose.

Plus particulièrement, les liquides ioniques décrits dans la présente invention peuvent servir à solubiliser et à convertir la cellulose en de nombreux produits chimiques. La solubilisation permet notamment la fonctionnalisation de la cellulose comme l'estérification ou l'éthérification qui conduisent à une grande variété de matériaux. Ainsi, les esters de cellulose trouvent de nombreuses applications dans l'industrie du papier, pour la préparation de fibres et de textiles ou encore comme polymères ou films.

La solubilisation de la cellulose dans les liquides ioniques selon la présente invention permet la fonctionnalisation, par exemple, par des groupements acétyles, tosyles ou trityles.

Les liquides ioniques revendiqués peuvent également être utilisés comme prétraitement de la biomasse lignocellulosique et ainsi améliorer l'étape associée d'hydrolyse enzymatique dans le schéma général de production de bioéthanol.

Les liquides ioniques selon la présente invention peuvent également servir dans la production de bioproduits et biocarburants issus de matériaux riches en cellulose, tel que le 5-hydroxyméthylfurfural (HMF), le sorbitol, le diméthylfurane, l'acide lévulinique ou encore les esters et éthers d'HMF.

Enfin, l'utilisation des liquides ioniques selon l'invention dans le traitement de la biomasse lignocellulosique peut permettre la séparation et la valorisation de la lignine présente dans ces matériaux en produits à valeurs ajoutées (résines, colles, bioplastiques, polyester...) et comme source de biocarburant (après pyrolyse).

Les exemples ci-après illustrent l'invention sans en limiter la portée.

### Exemples

### Exemple 1: Synthèse de l'allyl-3-méthyl-1-imidazolium diéthyldithiophosphate (AMI-DEPS2):

Sous argon, dans une solution de 3 g (19 mmol) d'allyl-3-méthyl-1-imidazolium chlorure dans 5 ml de dichlorométhane anhydre, on ajoute 4,05 g (19 mmol) de diéthyldithiophosphate d'ammonium. La suspension est agitée 2 heures à température ambiante. 5 ml d'éther diéthylique sont ensuite ajoutés et la solution est filtrée sur canule sous argon (papier Whatman n°5). Le filtrat est ensuite évaporé sous vide. On obtient 5,5 g d'un liquide marron-orangé : le rendement est de 95 %.
¹H RMN (300 MHz, DMSO): δ 9,15 (s, 1 H, N-CH-N), 7,74 (s, 1 H, N-CH-CH-N), 7,71 (s, 1 H, N-CH-CH-N), 6,04 (dt, 1 H, CH₂-C*H*-CH₂), 5,32 (m, 2H, CH-C*H*₂), 4,85 (m, 2H, C*H*₂-CH), 3,87 (s, 3H, N-C*H*₃), 3,74 (qt, 2H, C*H*₂-CH₃), 1,09 (t, 3H, CH₂-C*H*₃). ³¹P{H} RMN (300 MHz, DMSO): δ 113,1.

### Exemple 2: Synthèse de l'éthyl-3-méthyl-1-imidazolium diéthyldithiophosphate (EMI-DEPS2):

Sous argon, dans une solution de 15 g (92,5 mmol) d'éthyl-3-méthyl-1-imidazolium méthylcarbonate dans 25 ml d'éthanol anhydre on ajoute par addition lente 15,8 ml (92,5 mmol) de diéthyldithiophosphate. La solution est agitée 2 heures à température ambiante. Le solvant est évaporé sous vide. On obtient 28,5 g d'un liquide marron-foncé : le rendement est de 98 %.
¹H RMN (300 MHz, CD₂Cl₂): δ 10,17 (s, 1H, N-C*H*-N), 7,39 (s, 1H, N-CH-CH-N), 7,38 (s, 1 H, N-CH-CH-N), 4,39 (q, 2H, C*H*₂-CH₃), 4,04 (s, 3H, N-C*H*₃), 3,74 (qt, 2H, O-C*H*₂-CH₃), 1,54 (t, 3H, CH₂-C*H*₃) 1,09 (t, 3H, O-CH₂-C*H*₃). ³¹P{H} RMN (300 MHz, CD₂Cl₂): δ 112,1.

### Exemple 3: Solubilisation de la cellulose:

19 g de liquide ionique AMI-DEPS2 et 1 g de cellulose Avicel PH 101 (Sigma-Aldrich) sont placés dans un ballon de 170 ml et sont agités mécaniquement par des pâles à 70°C pendant 1 h. La cellulose est complètement soluble dans ces conditions.

### Exemple 4: Prétraitement et hydrolyse enzymatique:

19 g de liquide ionique AMI-DEPS2 et 1 g de cellulose Avicel PH 101 (sigma-aldrich) sont placés dans un ballon de 170 ml et sont agités mécaniquement par des pâles à 70°C pendant 1h dans un agitateur Tornado^{©} muni d'un carrousel 6 positions (Radleys).
Après ce prétraitement, le chauffage est coupé et 80 ml d'eau distillée sont ensuite rapidement ajoutés au mélange: la cellulose précipite. La suspension contenant le liquide ionique, l'eau et la cellulose est placée dans un tube à centrifugation et agitée à 9500 tr/min pendant 10 minutes. Le surnageant (ou eau de lavage) contenant le liquide ionique est ensuite éliminé. L'opération est répétée trois fois par addition d'eau distillée sur la partie solide encore présente dans le tube à centrifugation.
La cellulose dite amorphe récupérée est ensuite utilisée en hydrolyse enzymatique. Le solide récupéré après les lavages à la centrifugeuse est placé dans des flacons Schott de 100 ml. On ajoute 5 ml de tampon acétate, 10 ml d'une solution 1% poids de NaN₃ dans de l'eau puis on complète jusqu'à 100 g avec de l'eau distillée. Cette solution est ensuite laissée une nuit à 50°C pour "activation" sous une agitation de 550 tr/min dans un bain marie à sec STEM. On ajoute ensuite à la solution des quantités connues d'enzyme:
- Cellulases XL508, 10FPU par gramme de matière sèche
- β-glucosidases NOVOZYM 188, 25 CBU par gramme de matière sèche

Les solutions sont ensuite agitées à 400 tr/min à 50°C, toujours dans les bains marie à sec, et des prélèvements sont effectués au bout de 1 h, 4 h, 7 h et 24 h. Ces prélèvements sont placés dans des tubes à centrifuger et rapidement placés 10 minutes dans une huile à 103°C pour neutraliser l'activité enzymatique. Les tubes à centrifuger sont stockés dans un réfrigérateur à 4°C en attendant la mesure en glucose. Ils sont ensuite dilués par 5 avec de l'eau distillée avant d'être dosés à l'aide de l'appareillage analyseur Analox GL6, appelé glucostat, qui mesure par dosage enzymatique la concentration en glucose dans des solutions aqueuses.
Les résultats sont présentés dans le tableau 1.

### Exemple 5: Comparatif hydrolyse enzymatique:

La cellulose Avicel PH 101 (Sigma-Aldrich) est placé dans des flacons Schott de 100 ml. 5 ml de tampon acétate et 10 ml d'une solution 1% poids de NaN₃ dans de l'eau sont ajoutés puis la solution est complétée jusqu'à 100 g avec de l'eau distillée. Cette solution est ensuite laissée une nuit à 50°C pour "activation" sous une agitation de 550 tr/min dans un bain marie à sec STEM. On ajoute ensuite à la solution des quantités connues d'enzyme:
- Cellulases XL508, 10FPU par gramme de matière sèche
- β-glucosidases NOVOZYM 188, 25 CBU par gramme de matière sèche

Les solutions sont ensuite agitées à 400 tr/min à 50°C, toujours dans les bains marie à sec, et des prélèvements sont effectués au bout de 1 h, 4 h, 7 h et 24 h. Ces prélèvements sont placés dans des tubes à centrifuger et rapidement placés 10 minutes dans une huile à 103°C pour neutraliser l'activité enzymatique. Les tubes à centrifuger sont stockés dans un réfrigérateur à 4°C en attendant la mesure en glucose. Ils sont ensuite dilués par 5 avec de l'eau distillée avant d'être dosés à l'aide de l'appareillage glucostat qui mesure la concentration en glucose dans des solutions aqueuses.

Les résultats sont présentés dans le tableau 1.

**Tableau 1: Concentration en glucose obtenu après hydrolyse enzymatique**

| | Concentration en glucose dans la solution (mg/dl) | | | |
|---|---|---|---|---|
| | 1h | 4h | 7h | 24h |
| Prétraitement AMI-DEPS2 (selon exemple 3) | 140,8 | 344,8 | 465 | 777,8 |
| Cellulose native (selon exemple 4) | 112,8 | 248,0 | 334,0 | 608,0 |

Il s'agit de la concentration en glucose mesurée par dosage glucostat (concentration en glucose en mg/dl) après 1, 4, 7 et 24h d'hydrolyse enzymatique pour la cellulose avicel native (non-traitée) et pour la cellulose prétraitée par l'allyl-3-méthyl-1-imidazolium diéthyldithiophosphate (AMI-DEPS2)

La concentration en glucose obtenue est nettement supérieure avec le prétraitement au liquide ionique, ainsi après 24h d'hydrolyse 608 mg/dl de glucose théorique est formé dans le cas de la cellulose non-traitée en comparaison avec la concentration de 777,8 mg/dl associée au prétraitement à l'AMI-DEPS2.

## Revendications

1. Utilisation d'un liquide ionique associant un cation organique à un anion dithiophosphate dans le traitement et/ou la solubilisation de biomasse lignocellulosique, ledit liquide ionique étant choisi dans le groupe constitué par le diéthydithiophosphate d'allyl-3-méthyl-1-imidazolium, le diéthyldithiophosphate de vinyl-3-méthyl-1-imidazolium, le diéthyldithiophosphate d'éthyl-3-méthyl-1-imidazolium, le diéthyldithiophosphate de butyl-3-méthyl-1-imidazolium, le diphényldithiophosphate d'allyl-3-méthyl-1-imidazolium, le diphényldithiophosphate de vinyl-3-méthyl-1-imidazolium, le diphényldithiophosphate d'éthyl-3-méthyl-1-imidazolium, le diphényldithiophosphate de butyl-3-méthyl-1-imidazolium, le dibenzyldithiophosphate d'allyl-3-méthyl-1-imidazolium, le dibenzyldithiophosphate de vinyl-3-méthyl-1-imidazolium, le dibenzyldithiophosphate d'éthyl-3-méthyl-1-imidazolium, le dibenzyldithiophosphate de butyl-3-méthyl-1-imidazolium.

2. Utilisation du liquide ionique selon la revendication 1 dans la production de bioproduits et biocarburants issus de matériaux riches en cellulose, tel que le 5-hydroxyméthylfurfural (HMF), le sorbitol, le diméthylfurane, l'acide lévulinique ou encore les esters et éthers d'HMF.

## Patentansprüche

1. Verwendung einer ionischen Flüssigkeit, die ein organisches Kation mit einem Dithiophosphat-Anion verbindet, bei der Behandlung und/oder Solubilisierung von lignozellulärer Biomasse, wobei die ionische Flüssigkeit ausgewählt ist in der Gruppe, bestehend aus Diethyldithiophosphat von Allyl-3-Methyl-1-Imidazolium, Diethyldithiophosphat von Vinyl-3-Methyl-1-Imidazolium, Diethyldithiophosphat von Ethyl-3-Methyl-1-Imidazolium, Diethyldithiophosphat von Butyl-3-Methyl-1-Imidazolium, Diphenyldithiophosphat von Allyl-3-Methyl-1-Imidazolium, Diphenyldithiophosphat von Ethyl-3-Methyl-1-Imidazolium, Diphenyldithiophosphat von Ethyl-3-Methyl-1-Imidazolium, Diphenyldithiophosphat von Butyl-3-Methyl-1-Imidazolium, Dibenzyldithiophosphat von Allyl-3-Methyl-1-Imidazolium, Dibenzyldithiophosphat von Ethyl-3-Methyl-1-Imidazolium, Dibenzyldithiophosphat von Ethyl-3-Methyl-1-Imidazolium, Dibenzyldithiophosphat von Butyl-3-Methyl-1-Imidazolium.

2. Verwendung der ionischen Flüssigkeit nach Anspruch 1 bei der Herstellung von Bioprodukten und Biokraftstoffen, die von an Zellulose reichen Materialien stammen, wie 5-Hydroxymethylfurfural (HMF), Sorbitol, Dimethylfuran, Lävulinsäure oder auch die Ester und Ether von HMF.

## Claims

1. Use of an ionic liquid associating an organic cation with a dithiophosphate anion in the treatment and/or solubilisation of lignocellulosic biomass, said ionic liquid being selected from the group constituting of 1-ally-3-methyl imidazolium diethyldithiophosphate, 1-vinyl-3-methyl imidazolium diethyldithiophosphate, 1-ethyl-3-methyl imidazolium diethyl-dithiophosphate, 1-butyl-3-methyl imidazolium diethyl-dithiophosphate, 1-ally-3-methyl imidazolium diphenyldithiophosphate, 1-vinyl-3-methyl imidazolium diphenyldithiophosphate, 1-ethyl-3-methyl imidazolium diphenyldithiophosphate, 1-butyl-3-methyl imidazolium diphenyldithio-phosphate, 1-allyl-3-methyl imidazolium dibenzyldithiophosphate, 1-vinyl-3-methyl imidazolium dibenzyldithiophosphate, 1-ethyl-3-methyl imidazolium dibenzyldithiophosphate, and 1-butyl-3-methyl imidazolium dibenzyldithiophosphate.

2. Use of the ionic liquid according to claim 1 in the production of bioproducts and biofuels from cellulose-rich materials such as 5-hydroxymethylfurfural (HMF), sorbitol, dimethylfuran, levulinic acid or esters and ethers of HMF.
